# EUROPEAN PATENT APPLICATION

(11) **EP 4 170 538 A1**
(43) Date of publication of application: **26.04.2023**
(21) Application number: 21832822.7
(22) Date of filing: 22.04.2021
(51) Int. Cl.: G06F 30/20

(54) **CHIP SIMULATION METHOD, APPARATUS AND SYSTEM, AND DEVICE AND STORAGE MEDIUM**

(30) Priority: 28.06.2020 CN 202010599906
(71) Applicant: ZTE Corporation, Shenzhen, Guangdong 518057 (CN)
(72) Inventor: XU, Bangyuan, Shenzhen, Guangdong 518057 (CN)
(74) Representative: Zoli, Filippo
(86) International application number: PCT/CN2021/089017
(87) International publication number: WO 2022/001317

(57) **Abstract**

A chip simulation method, apparatus and system, and a device and a storage medium, which belong to the technical field of chip simulation. The method comprises: sending vector-type data to be processed, corresponding to chip simulation, to a preset vector execution module (S101); and acquiring a first data processing result obtained by the vector execution module performing data processing on said vector-type data, so as to generate, according to the first data processing result, a simulation result corresponding to the chip simulation (S102).

## Description

### CROSS-REFERENCE TO RELATED APPLICATION

This application is filed on the basis of Chinese patent application No. 202010599906.5 filed on June 28, 2020, and claims priority to the Chinese patent application, the entire contents of which are incorporated herein by reference.

### TECHNICAL FIELD

Embodiments of the present disclosure relate to the technical field of chip simulation, and disclose a chip simulation method, apparatus, and system, a device, and a storage medium.

### BACKGROUND

With the development of science and technology, processing capabilities of chips (such as central processing unit (CPU) chips) are required to be increasingly high, which makes simulation of the chips very important. Taking a CPU chip as an example, the CPU chip is simulated by building a corresponding CPU chip simulation environment. At present, there are mainly two methods to build the CPU chip simulation environment. One is to directly use a hardware description language to implement a CPU chip simulation algorithm and integrate the simulation algorithm into an Application Specific Integrated Circuit (ASIC) to build the simulation environment. The other is to use a high-level language to abstract the CPU chip and establish an object-oriented CPU chip simulation system.

Related scalar and vector operations are required in the CPU chip simulation, which may affect an operating speed of the CPU chip simulation. In particular, the vector operations may significantly reduce the operating speed of the CPU chip simulation, resulting in low efficiency of the CPU chip simulation.

### SUMMARY

Embodiments of the present disclosure provide a chip simulation method, apparatus, and system, a device, and a storage medium.

In accordance with an aspect of the present disclosure, an embodiment provides a chip simulation method. The method includes: sending vector-type to-be-processed data corresponding to chip simulation to a preset vector execution module; and acquiring a first data processing result of data processing performed on the vector-type to-be-processed data by the vector execution module, so as to generate a simulation result corresponding to the chip simulation according to the first data processing result.

In accordance with an aspect of the present disclosure, an embodiment provides a computer device. The computer device includes a memory and a processor, where the memory is configured to store a computer program which, when executed by the processor, causes the processor to implement the chip simulation method as described above.

In accordance with an aspect of the present disclosure, an embodiment provides a chip simulation method. The method includes: acquiring vector-type to-be-processed data corresponding to chip simulation sent by a scalar execution module; and performing data processing on the vector-type to-be-processed data to obtain a first data processing result for the scalar execution module to generate a simulation result corresponding to the chip simulation according to the first data processing result.

In accordance with an aspect of the present disclosure, an embodiment provides a chip simulation apparatus. The simulation apparatus includes a memory and a processor, where the memory is configured to store a computer program which, when executed by the processor, causes the processor to implement the chip simulation methods as described above.

In accordance with an aspect of the present disclosure, an embodiment further provides a chip simulation system. The system includes the computer device as described above and the chip simulation apparatus as described above, where the computer device is in communication connection with the chip simulation apparatus.

In accordance with an aspect of the present disclosure, an embodiment further provides a computer-readable storage medium, storing a computer program which, when executed by a processor, causes the processor to implement the chip simulation methods as described above.

### BRIEF DESCRIPTION OF DRAWINGS

FIG. 1 is a schematic block diagram of a chip simulation system according to an embodiment of the present disclosure;
FIG. 2 is a schematic block diagram of a computer device according to an embodiment of the present disclosure;
FIG. 3 is a schematic block diagram of a chip simulation apparatus according to an embodiment of the present disclosure;
FIG. 4 is a schematic flowchart of steps of a chip simulation method according to an embodiment of the present disclosure;
FIG. 5 is a schematic flowchart of steps of another chip simulation method according to an embodiment of the present disclosure; and
FIG. 6 is a schematic flowchart of CPU chip simulation according to an embodiment of the present disclosure.

### DETAILED DESCRIPTION

The technical schemes in the embodiments of the present disclosure will be described clearly and completely below with reference to the accompanying drawings in the embodiments of the present disclosure. It is apparent that the described embodiments are merely some but not all of the embodiments of the present disclosure. All other embodiments acquired by those having ordinary skills in the art without creative efforts based on the embodiments of the present disclosure shall fall within the protection scope of the present disclosure.

The flowcharts shown in the accompanying drawings are merely illustrative, and do not need to include all of the contents and operations/steps, nor do they have to be performed in the order described. For example, some operations/steps may be further divided, combined or partially combined. Therefore, an actual execution order may change according to an actual situation.

It should be understood that the terms used herein in the description of the present disclosure are for the purpose of describing specific embodiments only, and are not intended to limit the present disclosure. As used in the description of the present disclosure and the appended claims, the singular forms of "alan", "one", and "the" are intended to include plural forms, unless otherwise clearly specified in the context.

It should be further understood that the term "and/or" used in the description of the present disclosure and the appended claims refers to any and all possible combinations of one or more of relevant items listed and includes such combinations.

It should be understood that specific embodiments described herein are only used to interpret the present disclosure and are not intended to limit the present disclosure.

In subsequent descriptions, suffixes such as "module", "component", or "unit" used to denote elements are used to facilitate description of the embodiments of the present disclosure, and have no particular meaning. Therefore, "module", "component", and "unit" may be used interchangeably.

Embodiments of the present disclosure provide a chip simulation method, apparatus, and system, a device, and a storage medium, so as to improve efficiency of chip simulation. A chip includes, but is not limited to, a CPU chip, and may also include, for example, other integrated chips. The embodiments of the present disclosure will be illustrated by taking the CPU chip as an example in the present disclosure.

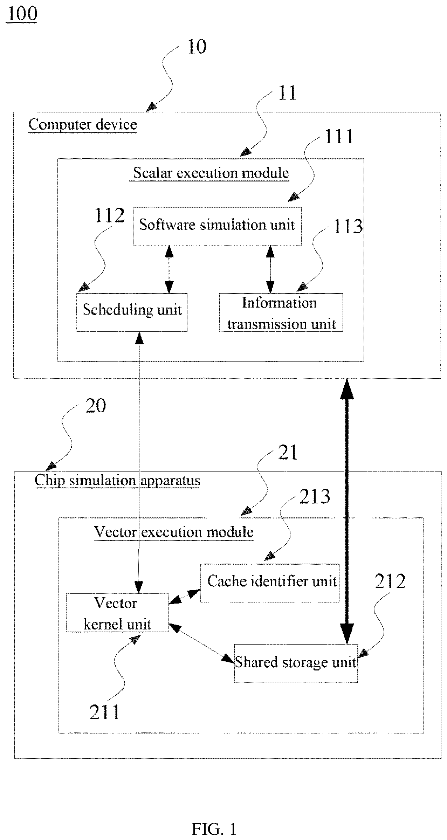

Referring to FIG. 1, FIG. 1 is a schematic block diagram of a chip simulation system according to an embodiment of the present disclosure. The chip simulation system 100 includes a computer device 10, and a chip simulation apparatus 20. A wired or wireless communication connection is established between the computer device 10 and the chip simulation apparatus 20.

The computer device 10 includes a scalar execution module 11. The scalar execution module 11 includes a software simulation unit 111. The chip simulation apparatus 20 includes a vector execution module 21. The vector execution module 21 includes a vector kernel unit 211. The scalar execution module 11 is designed and implemented in a high-level language, and the vector execution module 21 is designed and implemented on a semi-customized hardware system to accelerate vector operations.

In some examples, the vector execution module 21 includes, but is not limited to, a Field-Programmable Gate Array (FPGA), a Graphics Processing Unit (GPU), and other hardware systems that can provide vector operation optimization.

The vector kernel unit 211 is a hardware execution system dedicated for optimization of the vector operations, which may accelerate the vector operations in CPU chip simulation according to scalar and vector deployment of the CPU chip simulation, and at the same time, can ensure flexible construction of the scalar execution module 11.

The scalar execution module 11 sends configuration information corresponding to the CPU chip simulation to the vector execution module 21. After receiving the configuration information, the vector execution module 21 performs configuration of the vector kernel unit 211 according to the configuration information, and after completion of the configuration of the vector kernel unit 211, the vector execution module 21 sends corresponding configuration completion information to the scalar execution module 11. After the scalar execution module 11 receives the configuration completion information sent by the vector execution module 21, the software simulation unit 111 begins to perform simulation of a CPU chip system, and continuously sends vector-type to-be-processed data and a data parameter corresponding to the vector-type to-be-processed data to the vector execution module 21. The data parameter includes, but is not limited to, a data size, a data attribute, a data operation type, and so on. The vector kernel unit 211 continuously acquires the vector-type to-be-processed data and the corresponding data parameter for data processing and feeds results back to the scalar execution module 11. The scalar execution module 11 determines, according to the results fed back, whether to terminate the simulation to give a simulation result.

In some examples, the scalar execution module 11 further includes a scheduling unit 112 and an information transmission unit 113. The vector execution module 21 further includes a shared storage unit 212 and a cache identifier unit 213.

After the scalar and vector deployment of the CPU chip simulation is determined, the scheduling unit 112 determines a construction manner of the vector kernel unit 211 according to the deployment, and sends a corresponding script file to the vector execution module 21. The vector execution module 21 constructs the vector kernel unit 211 according to the script file.

The information transmission unit 113 continuously sends the vector-type to-be-processed data and the corresponding data parameter to the vector execution module 21. The vector kernel unit 211 continuously acquires the vector-type to-be-processed data and the corresponding data parameter for processing and feeds back results.

The information transmission unit 113 can optimize scalar and vector partitioning granularity, that is, optimize configuration of partitioning granularity of the vector-type to-be-processed data and scalar-type to-be-processed data, so as to give full play to the performance of scalar and vector separation and improve simulation efficiency.

The shared storage unit 212 is physically connected with the scalar execution module 11, for example, through a corresponding physical interface. The vector-type to-be-processed data is stored in the shared storage unit 212.

The cache identifier unit 213 is configured to store a physical address and a data parameter that correspond to the vector-type to-be-processed data. The vector kernel unit 211 performs data indexing in the shared storage unit 212 according to the physical address cached in the cache identifier unit 213, and acquires corresponding vector-type to-be-processed data for data processing.

The scalar execution module 11 and the vector execution module 21 perform data transmission through shared memory of physical address mapping, which reduces the number of data migrations and further improves the efficiency of the CPU chip simulation.

In some examples, simulation operations of the vector kernel unit 211 and the software simulation unit 111 may be performed concurrently. In other words, the software simulation unit 111 performs data processing on the scalar-type to-be-processed data, while the vector kernel unit 211 performs data processing on the vector-type to-be-processed data, so as to improve operation efficiency of the CPU chip simulation system.

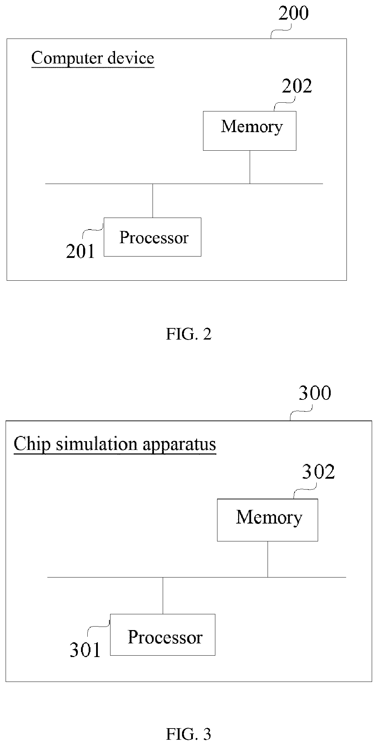

Referring to FIG. 2, FIG. 2 is a schematic block diagram of a computer device according to an embodiment of the present disclosure. The computer device 200 includes a processor 201 and a memory 202 which are connected through a bus.

The memory 202 may include a non-volatile storage medium and an internal memory.

The non-volatile storage medium may store an operating system and a computer program. The computer program includes a program instruction which, when executed by the processor, causes the processor to implement any of the chip simulation methods.

The processor 201 is configured to provide computing and control capabilities to support operation of an entire terminal device.

The internal memory provides an environment for the operation of the computer program in the non-volatile storage medium. The computer program, when executed by the processor, causes the processor to implement any one of the chip simulation methods.

It may be understood that the structure shown in FIG. 2 is only a block diagram of a partial structure related to the scheme of the embodiments of the present disclosure, which does not constitute a limitation on the computer device to which the scheme of the embodiments of the present disclosure is applied. In an embodiment, the computer device may include more or fewer components than those shown in the figure, or some components may be combined, or a different component deployment may be used.

It should be understood that the processor 201 may be a Central Processing Unit (CPU).

The processor may also be other general-purpose processor, a Digital Signal Processor (DSP), an Application Specific Integrated Circuit (ASIC), a Field-Programmable Gate Array (FPGA) or another programmable logic device, a discrete gate or a transistor logic device, a discrete hardware component, or the like. The general-purpose processor may be a microprocessor, or the processor may be any normal processor, or the like.

In some embodiments, the processor is configured to execute the computer program stored in the memory to implement the following steps:
sending vector-type to-be-processed data corresponding to chip simulation to a preset vector execution module; and
acquiring a first data processing result of data processing performed on the vector-type to-be-processed data by the vector execution module, so as to generate a simulation result corresponding to the chip simulation according to the first data processing result.

In some embodiments, prior to sending vector-type to-be-processed data corresponding to chip simulation to a preset vector execution module, the processor is further configured to send configuration information corresponding to the chip simulation to the vector execution module for the vector execution module to configure a vector kernel unit according to the configuration information, and perform data processing on the vector-type to-be-processed data through the vector kernel unit.

In some embodiments, the vector execution module includes a shared storage unit, and, when sending vector-type to-be-processed data corresponding to chip simulation to a preset vector execution module, the processor is configured to:
send the vector-type to-be-processed data to the shared storage unit for the vector kernel unit to acquire the vector-type to-be-processed data from the shared storage unit; and
when acquiring a first data processing result of data processing performed on the vector-type to-be-processed data by the vector execution module, the processor is configured to:
   acquire the first data processing result saved in the shared storage unit.

In some embodiments, the vector execution module further includes a cache identifier unit, and the processor is further configured to:
send a data parameter corresponding to the vector-type to-be-processed data to the cache identifier unit for the vector kernel unit to acquire the data parameter from the cache identifier unit, determine a processing manner of the vector-type to-be-processed data according to the data parameter, and perform data processing on the vector-type to-be-processed data in the processing manner.

In some embodiments, the processor is further configured to perform data processing on scalar-type to-be-processed data corresponding to the chip simulation to obtain a second data processing result; and
after acquiring the first data processing result of data processing performed on the vector-type to-be-processed data by the vector execution module, the processor is further configured to:
generate the simulation result according to the first data processing result and the second data processing result.

In some embodiments, the processor is further configured to configure partitioning granularity of the vector-type to-be-processed data and the scalar-type to-be-processed data.

Referring to FIG. 3, FIG. 3 is a schematic block diagram of a chip simulation apparatus according to an embodiment of the present disclosure. The chip simulation apparatus 300 includes a processor 301 and a memory 302 which are connected through a bus.

The memory 302 may include a non-volatile storage medium and an internal memory.

The non-volatile storage medium may store an operating system and a computer program. The computer program includes a program instruction which, when executed by the processor, causes the processor to implement any one of the chip simulation methods.

The processor 301 is configured to provide computing and control capabilities to support operation of an entire terminal device.

The internal memory provides an environment for the operation of the computer program in the non-volatile storage medium. The computer program, when executed by the processor, causes the processor to implement any one of the chip simulation methods.

It may be understood that the structure shown in FIG. 3 is only a block diagram of a partial structure related to the scheme of the embodiments of the present disclosure, which does not constitute a limitation on the chip simulation apparatus to which the scheme of the embodiments of the present disclosure is applied. In an embodiment, the chip simulation apparatus may include more or fewer components than those shown in the figure, or some components may be combined, or a different component deployment may be used.

It should be understood that the processor 301 may be a Central Processing Unit (CPU). The processor may also be another general-purpose processor, a Digital Signal Processor (DSP), an Application Specific Integrated Circuit (ASIC), a Field-Programmable Gate Array (FPGA) or another programmable logic device, a discrete gate or a transistor logic device, a discrete hardware component, or the like. The general-purpose processor may be a microprocessor, or the processor may be any normal processor, or the like.

In some embodiments, the processor is configured to execute the computer program stored in the memory to implement the following steps:
acquiring vector-type to-be-processed data corresponding to chip simulation sent by a scalar execution module; and
performing data processing on the vector-type to-be-processed data to obtain a first data processing result for the scalar execution module to generate a simulation result corresponding to the chip simulation according to the first data processing result.

In some embodiments, when acquiring vector-type to-be-processed data corresponding to chip simulation sent by a scalar execution module, the processor is configured to:
acquire a physical address corresponding to the vector-type to-be-processed data saved in a cache identifier unit; and
perform data indexing in a shared storage unit according to the physical address, and acquire the vector-type to-be-processed data, where the scalar execution module sends the vector-type to-be-processed data to the shared storage unit.

In some embodiments, when performing data processing on the vector-type to-be-processed data, the processor is configured to:
acquire a data parameter corresponding to the vector-type to-be-processed data saved in the cache identifier unit, where the scalar execution module sends the data parameter to the cache identifier unit; and
determine a processing manner of the vector-type to-be-processed data according to the data parameter, and perform data processing on the vector-type to-be-processed data in the processing manner.

In some embodiments, after performing data processing on the vector-type to-be-processed data to obtain the first data processing result, the processor is further configured to:
save the first data processing result in the shared storage unit, and save a physical address corresponding to the first data processing result in the cache identifier unit.

To facilitate understanding, the chip simulation method according to the embodiments of the present disclosure is illustrated in detail below in conjunction with the chip simulation system in FIG. 1, the computer device in FIG. 2, and the chip simulation apparatus in FIG. 3. It should be noted that the chip simulation system, the computer device, and the chip simulation apparatus do not constitute limitations on application scenarios of the chip simulation method according to the embodiments of the present disclosure.

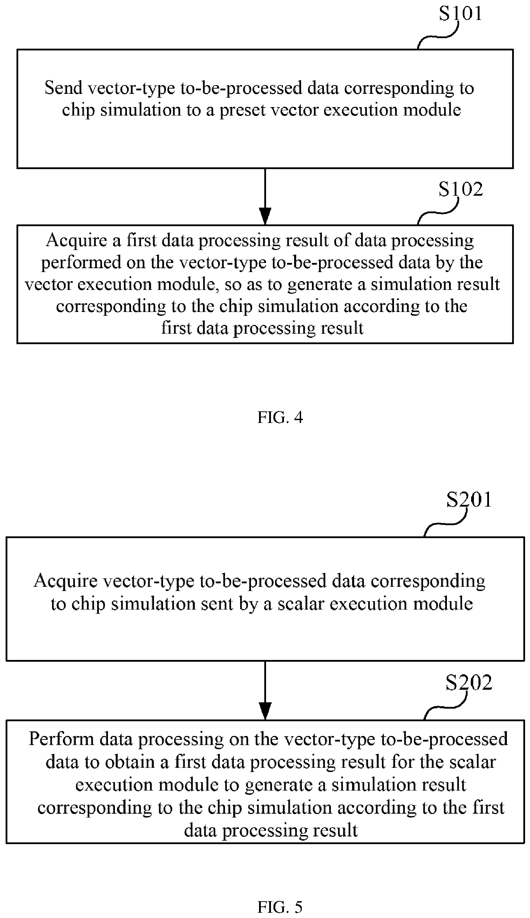

As shown in FIG. 4, FIG. 4 is a schematic flowchart of steps of a chip simulation method according to an embodiment of the present disclosure. The method may be applied to the above computer device to improve the efficiency of chip simulation.

In an embodiment, as shown in FIG. 4, the method includes the following steps S101 to S102.

At S101, vector-type to-be-processed data corresponding to chip simulation is sent to a preset vector execution module.

In the CPU chip simulation, scalar and vector operations correspond to scalar-type to-be-processed data and vector-type to-be-processed data, respectively. Prior to the scalar and vector operations, the scalar-type to-be-processed data and the vector-type to-be-processed data are first distinguished, and then the determined vector-type to-be-processed data is sent to the preset vector execution module. The vector execution module is designed and implemented on a semi-customized hardware system to accelerate vector operations.

In some examples, the vector execution module includes, but is not limited to, an FPGA, a GPU, and other hardware systems, which can provide a vector operation function.

After receiving and acquiring the vector-type to-be-processed data, the vector execution module performs corresponding data processing on the vector-type to-be-processed data. The data processing includes data time-domain/frequency-domain conversion, data encoding and decoding, and the like.

In some embodiments, prior to S101, the method may further include: sending configuration information corresponding to the chip simulation to the vector execution module for the vector execution module to configure a vector kernel unit according to the configuration information, and to perform data processing on the vector-type to-be-processed data through the vector kernel unit.

Prior to the simulation, the vector kernel unit of the vector execution module is configured. The vector kernel unit is a core unit of the vector execution module, which is a hardware execution system dedicated for optimization of the vector operations and configured to perform data processing on the vector-type to-be-processed data, and can accelerate vector operations in CPU chip simulation.

In some examples, configuration information corresponding to the CPU chip simulation is sent to the vector execution module, and the vector execution module, after receiving the configuration information, configures the vector kernel unit of the vector execution module according to the configuration information. For example, by taking a Digital Signal Processing (DSP) kernel execution unit as an example, communication application chip simulation-oriented DSP kernel configuration information is sent to the vector execution module, and the vector execution module constructs the DSP kernel execution unit according to the configuration information, which is configured to process large-scale vector operations in mobile communication.

In some examples, after the scalar and vector deployment of the CPU chip simulation is determined, a construction manner of the vector kernel unit in the vector execution module is determined according to the deployment, and a corresponding script file is sent to the vector execution module. After receiving the script file, the vector execution module configures the vector kernel unit according to the script file.

After completion of the configuration of the vector kernel unit, the vector execution module feeds back corresponding configuration completion information. After the configuration completion information is received, CPU chip simulation is performed, and corresponding vector-type to-be-processed data is sent to the vector execution module. The vector execution module, after receiving and acquiring the vector-type to-be-processed data, performs corresponding data processing on the vector-type to-be-processed data through the configured vector kernel unit, and obtains a corresponding data processing result. For ease of description, the data processing result obtained through data processing on the vector-type to-be-processed data is hereinafter referred to as a first data processing result.

At S102, a first data processing result of data processing performed on the vector-type to-be-processed data by the vector execution module is acquired, so as to generate a simulation result corresponding to the chip simulation according to the first data processing result.

After the corresponding data processing is performed on the vector-type to-be-processed data through the vector kernel unit to obtain the first data processing result, the first data processing result is acquired. For example, after data processing is performed to obtain the first data processing result, the vector execution module feeds back the first data processing result, and the first data processing result fed back by the vector execution module is directly received and acquired.

In another example, after data processing is performed to obtain the first data processing result, the vector execution module saves the first data processing result in a corresponding storage apparatus. Therefore, the first data processing result can be obtained by querying the storage apparatus.

The first data processing result is used as intermediate information obtained for CPU chip simulation. It is determined based on the first data processing result whether the CPU chip simulation is completed, and a corresponding simulation result is generated.

In some embodiments, while the vector-type to-be-processed data is sent to the vector execution module, data processing is performed on corresponding scalar-type to-be-processed data to obtain a data processing result corresponding to the scalar-type to-be-processed data. For ease of description, the data processing result obtained by data processing on the scalar-type to-be-processed data is hereinafter referred to as a second data processing result.

In other words, while data processing is performed on the vector-type to-be-processed data by the vector execution module, data processing is performed on the scalar-type to-be-processed data, and a first data processing result corresponding to the vector-type to-be-processed data and a second data processing result corresponding to the scalar-type to-be-processed data are obtained.

The first data processing result and the second data processing result are comprehensively analyzed according to the obtained first data processing result and second data processing result, to generate the simulation result corresponding to the CPU chip simulation.

In some embodiments, the vector execution module further includes a shared storage unit configured to store to-be-processed data and a data processing result corresponding to the to-be-processed data. The sending vector-type to-be-processed data corresponding to chip simulation to a preset vector execution module may include: sending the vector-type to-be-processed data to the shared storage unit for the vector kernel unit to acquire the vector-type to-be-processed data from the shared storage unit. The acquiring a first data processing result of data processing performed on the vector-type to-be-processed data by the vector execution module may include: acquiring the first data processing result saved in the shared storage unit.

The vector-type to-be-processed data is sent to and saved by the shared storage unit of the vector execution module. The vector kernel unit may directly acquire the saved vector-type to-be-processed data from the shared storage unit, perform data processing on the vector-type to-be-processed data to obtain the corresponding first data processing result, and save the first data processing result in the shared storage unit. Then, the first data processing result corresponding to the vector-type to-be-processed data can be acquired by accessing the shared storage unit.

In some embodiments, the vector execution module further includes a cache identifier unit. The cache identifier unit may be configured to store a data parameter corresponding to the vector-type to-be-processed data. The data parameter includes, but is not limited to, a data size, a data attribute, a data operation type, and the like. While the vector-type to-be-processed data is sent to the shared storage unit, the data parameter corresponding to the vector-type to-be-processed data is sent to the cache identifier unit. The vector kernel unit acquires the saved vector-type to-be-processed data from the shared storage unit, acquires the data parameter corresponding to the vector-type to-be-processed data from the cache identifier unit, determines a processing manner of the vector-type to-be-processed data according to the data parameter corresponding to the vector-type to-be-processed data, and then performs data processing on the vector-type to-be-processed data in the processing manner.

In some embodiments, a physical address corresponding to the vector-type to-be-processed data stored in the shared storage unit is saved in the cache identifier unit. By acquiring the physical address corresponding to the vector-type to-be-processed data saved in the cache identifier unit, the vector kernel unit can perform data indexing in the shared storage unit according to the physical address to acquire the corresponding vector-type to-be-processed data, and then perform data processing on the vector-type to-be-processed data. In other words, data transmission is performed through shared memory of physical address mapping, which reduces the number of data migrations, thereby increasing an operating speed of simulation.

In some embodiments, the data parameter corresponding to the vector-type to-be-processed data and the vector-type to-be-processed data may be sent to the shared storage unit together, and are associatively saved in the shared storage unit. The vector kernel unit may acquire, from the shared storage unit, the vector-type to-be-processed data and the data parameter corresponding to the vector-type to-be-processed data associatively saved, determine a processing manner of the vector-type to-be-processed data according to the data parameter corresponding to the vector-type to-be-processed data, and then perform data processing on the vector-type to-be-processed data in the processing manner.

In some embodiments, partitioning granularity of the vector-type to-be-processed data and the scalar-type to-be-processed data is configured regularly or when a preset condition is currently met. That is, scalar and vector partitioning granularity is optimized. For example, if each call to the cache identifier unit consumes the same amount of time, scalar and vector processes are integrated and the scalar and vector partitioning granularity is optimized to reduce the number of calls to the cache identifier unit.

As shown in FIG. 5, FIG. 5 is a schematic flowchart of a chip simulation method according to another embodiment of the present disclosure. The chip simulation method may be applied to a chip simulation apparatus, and includes the following steps S201 and S202.

At S201, vector-type to-be-processed data corresponding to chip simulation sent by a scalar execution module is acquired.

In the CPU chip simulation, prior to scalar and vector operations, vector-type to-be-processed data and scalar-type to-be-processed data are distinguished by a scalar execution module configured in a computer device, and the determined vector-type to-be-processed data is sent to the chip simulation apparatus. The scalar execution module is designed and implemented in a high-level language. In some examples, a vector execution module is preset in the chip simulation apparatus. The vector execution module is designed and implemented on a semi-customized hardware system, which can accelerate the vector operations. In some examples, the vector execution module includes, but is not limited to, an FPGA, a GPU, and other hardware systems, which can provide a vector operation function. The chip simulation apparatus receives and acquires, through the vector execution module, the vector-type to-be-processed data sent by the scalar execution module.

In some embodiments, the vector execution module includes a vector kernel unit, and the vector-type to-be-processed data sent by the scalar execution module is received and acquired through the vector kernel unit.

In some embodiments, the acquiring vector-type to-be-processed data corresponding to chip simulation sent by a scalar execution module may include: acquiring a physical address corresponding to the vector-type to-be-processed data saved in a cache identifier unit; and performing data indexing in a shared storage unit according to the physical address to acquire the vector-type to-be-processed data, where the scalar execution module sends the vector-type to-be-processed data to the shared storage unit.

The vector execution module further includes a shared storage unit and a cache identifier unit. The shared storage unit stores the vector-type to-be-processed data. The cache identifier unit stores a physical address corresponding to the vector-type to-be-processed data. The physical address corresponding to the vector-type to-be-processed data saved in the cache identifier unit is acquired, and data indexing is then performed in the shared storage unit according to the physical address corresponding to the vector-type to-be-processed data to acquire the corresponding vector-type to-be-processed data. In other words, data transmission is performed through shared memory of physical address mapping, which reduces the number of data migrations, thereby increasing an operating speed of simulation.

At S202, data processing is performed on the vector-type to-be-processed data to obtain a first data processing result for the scalar execution module to generate a simulation result corresponding to the chip simulation according to the first data processing result.

After the vector-type to-be-processed data is acquired, data processing is performed on the vector-type to-be-processed data to obtain a data processing result corresponding to the vector-type to-be-processed data. For ease of description, the data processing result corresponding to the vector-type to-be-processed data is hereinafter referred to as a first data processing result.

In some embodiments, the performing data processing on the vector-type to-be-processed data may include: acquiring a data parameter corresponding to the vector-type to-be-processed data saved in the cache identifier unit, where the scalar execution module sends the data parameter to the cache identifier unit; and determining a processing manner of the vector-type to-be-processed data according to the data parameter, and performing data processing on the vector-type to-be-processed data in the processing manner.

The data parameter corresponding to the vector-type to-be-processed data includes, but is not limited to, a data size, a data attribute, a data operation type, and the like. The cache identifier unit may be further configured to store the data parameter corresponding to the vector-type to-be-processed data. While the scalar execution module sends the vector-type to-be-processed data to the shared storage unit, the data parameter corresponding to the vector-type to-be-processed data is sent to the cache identifier unit. By acquiring the saved vector-type to-be-processed data from the shared storage unit, and acquiring the data parameter corresponding to the vector-type to-be-processed data from the cache identifier unit, a processing manner of the vector-type to-be-processed data is determined according to the data parameter corresponding to the vector-type to-be-processed data, and then data processing is performed on the vector-type to-be-processed data in the processing manner.

In some embodiments, after the performing data processing on the vector-type to-be-processed data to obtain a first data processing result, the method may include: saving the first data processing result in the shared storage unit, and saving a physical address corresponding to the first data processing result in the cache identifier unit.

After data processing is performed on the vector-type to-be-processed data to obtain the first data processing result, the first data processing result is not directly fed back to the scalar execution module. Rather, the first data processing result is saved in the shared storage unit, and the physical address corresponding to the first data processing result is saved in the cache identifier unit. Then, by acquiring the physical address corresponding to the first data processing result saved in the cache identifier unit, the scalar execution module performs data indexing in the shared storage unit to acquire the first data processing result.

The scalar execution module generates a simulation result corresponding to the CPU chip simulation according to the first data processing result. In some examples, the scalar execution module performs data processing on the corresponding scalar-type to-be-processed data, and obtains a data processing result corresponding to the scalar-type to-be-processed data. For ease of description, the data processing result obtained by data processing on the scalar-type to-be-processed data is hereinafter referred to as a second data processing result. In other words, while data processing is performed on the vector-type to-be-processed data through the vector execution module to obtain the first data processing result corresponding to the vector-type to-be-processed data, data processing is performed on the scalar-type to-be-processed data through the scalar execution module to obtain the second data processing result corresponding to the scalar-type to-be-processed data. The scalar execution module comprehensively analyzes the first data processing result and the second data processing result according to the obtained first data processing result and second data processing result, to generate the simulation result corresponding to the CPU chip simulation.

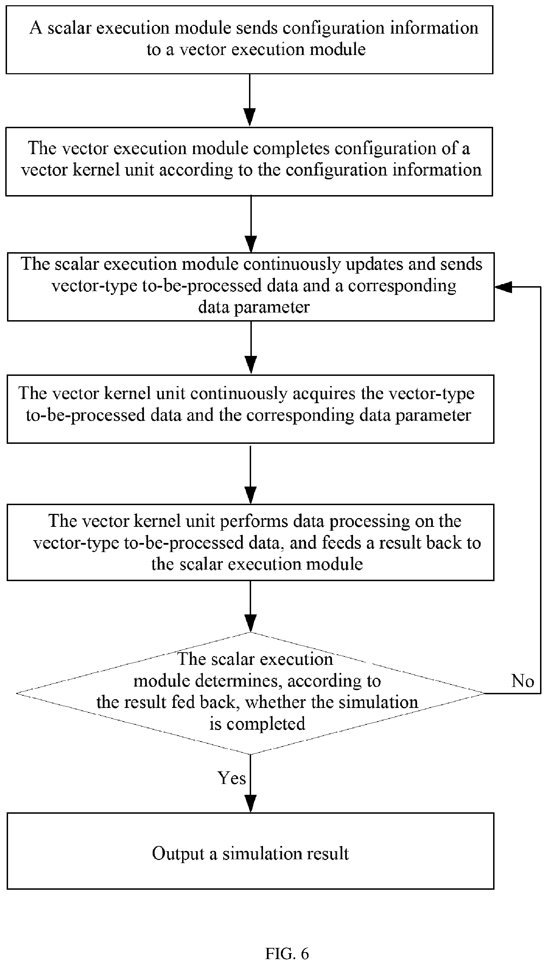

As shown in FIG. 6, a detailed process of CPU chip simulation includes the follows steps Step1 to Step7.

At Stepl, a scalar execution module sends configuration information to a vector execution module.

At Step2, the vector execution module completes configuration of a vector kernel unit according to the configuration information.

At Step3, the scalar execution module continuously updates and sends vector-type to-be-processed data and a corresponding data parameter.

At Step4, the vector kernel unit continuously acquires the vector-type to-be-processed data and the corresponding data parameter.

At Step5, the vector kernel unit performs data processing on the vector-type to-be-processed data, and feeds a result back to the scalar execution module.

At Step6, the scalar execution module determines, according to the result fed back, whether the simulation is completed; if yes, Step7 is performed; and if not, Step3 is performed.

At Step7, a simulation result is outputted.

In the above embodiments, the vector-type to-be-processed data corresponding to chip simulation is sent to the preset vector execution module, data processing is performed on the vector-type to-be-processed data by the vector execution module to obtain a corresponding first data processing result, and the simulation result corresponding to the chip simulation is generated based on the first data processing result. In other words, vector operations in the chip simulation are separated and processed independently, thereby improving efficiency of the chip simulation.

An embodiment of the present disclosure further provides a computer-readable storage medium. The computer-readable storage medium stores a computer program including a program instruction which, when executed by a processor, causes the processor to implement any one of the chip simulation methods according to the embodiments of the present disclosure.

For example, the computer program, when executed by the processor, causes the processor to implement the following steps:
sending vector-type to-be-processed data corresponding to chip simulation to a preset vector execution module; and
acquiring a first data processing result of data processing performed on the vector-type to-be-processed data by the vector execution module, so as to generate a simulation result corresponding to the chip simulation according to the first data processing result.

The embodiments of the present disclosure disclose a chip simulation method and apparatus, a device, and a storage medium. According to the embodiments of the disclosure, vector-type to-be-processed data corresponding to chip simulation is sent to a preset vector execution module, data processing is performed on the vector-type to-be-processed data by the vector execution module to obtain a corresponding first data processing result, and a simulation result corresponding to the chip simulation is generated based on the first data processing result. In other words, vector operations in the chip simulation are separated and performed independently, thereby improving efficiency of the chip simulation.

The computer-readable storage medium may be an internal storage unit in the chip simulation system in the above embodiments, for example, a hard disk or memory of the chip simulation system. The computer-readable storage medium may also be an external storage device of the chip simulation system, for example, a plug-in hard disk, a Smart Media Card (SMC), a Secure Digital (SD) card, a Flash Card, or the like provided on the chip simulation system.

The above are merely specific implementations of the present disclosure, but the protection scope of the present disclosure is not limited thereto. Any equivalent modification or replacement readily conceivable by those having ordinary skills in the art within the technical scope of the present disclosure shall fall within the protection scope of the present disclosure. Therefore, the protection scope of the present disclosure shall be defined by the protection scope of the claims.

## Claims

1. A chip simulation method, comprising:
sending vector-type to-be-processed data corresponding to chip simulation to a preset vector execution module; and
acquiring a first data processing result of data processing performed on the vector-type to-be-processed data by the vector execution module, so as to generate a simulation result corresponding to the chip simulation according to the first data processing result.

2. The chip simulation method of claim 1, wherein prior to sending vector-type to-be-processed data corresponding to chip simulation to a preset vector execution module, the method further comprising:
sending configuration information corresponding to the chip simulation to the vector execution module for the vector execution module to configure a vector kernel unit according to the configuration information, and to perform data processing on the vector-type to-be-processed data through the vector kernel unit.

3. The chip simulation method of claim 2, wherein the vector execution module comprises a shared storage unit, and
sending vector-type to-be-processed data corresponding to chip simulation to a preset vector execution module comprises:
sending the vector-type to-be-processed data to the shared storage unit for the vector kernel unit to acquire the vector-type to-be-processed data from the shared storage unit; and
acquiring a first data processing result of data processing performed on the vector-type to-be-processed data by the vector execution module comprises:
acquiring the first data processing result saved in the shared storage unit.

4. The chip simulation method of claim 3, wherein the vector execution module further comprises a cache identifier unit, and the method further comprises:
sending a data parameter corresponding to the vector-type to-be-processed data to the cache identifier unit for the vector kernel unit to acquire the data parameter from the cache identifier unit, determine a processing manner of the vector-type to-be-processed data according to the data parameter, and perform data processing on the vector-type to-be-processed data in the processing manner.

5. The chip simulation method of any one of claims 1 to 4, further comprising:
performing data processing on scalar-type to-be-processed data corresponding to the chip simulation to obtain a second data processing result; and
wherein after acquiring a first data processing result of data processing performed on the vector-type to-be-processed data by the vector execution module, the method further comprising:
generating the simulation result according to the first data processing result and the second data processing result.

6. The chip simulation method of claim 5, further comprising:
configuring partitioning granularity of the vector-type to-be-processed data and the scalar-type to-be-processed data.

7. A chip simulation method, comprising:
acquiring vector-type to-be-processed data corresponding to chip simulation sent by a scalar execution module; and
performing data processing on the vector-type to-be-processed data to obtain a first data processing result for the scalar execution module to generate a simulation result corresponding to the chip simulation according to the first data processing result.

8. The chip simulation method of claim 7, wherein acquiring vector-type to-be-processed data corresponding to chip simulation sent by a scalar execution module comprises:
acquiring a physical address corresponding to the vector-type to-be-processed data saved in a cache identifier unit; and
performing data indexing in a shared storage unit according to the physical address to acquire the vector-type to-be-processed data, wherein the scalar execution module sends the vector-type to-be-processed data to the shared storage unit.

9. The chip simulation method of claim 8, wherein performing data processing on the vector-type to-be-processed data comprises:
acquiring a data parameter corresponding to the vector-type to-be-processed data saved in the cache identifier unit, wherein the scalar execution module sends the data parameter to the cache identifier unit; and
determining a processing manner of the vector-type to-be-processed data according to the data parameter, and performing data processing on the vector-type to-be-processed data in the processing manner.

10. The chip simulation method of claim 8 or 9, wherein after performing data processing on the vector-type to-be-processed data to obtain a first data processing result, the method further comprises:
saving the first data processing result in the shared storage unit, and saving a physical address corresponding to the first data processing result in the cache identifier unit.

11. A computer device, comprising a memory and a processor, wherein the memory is configured to store a computer program which, when executed by the processor, causes the processor to perform the chip simulation method of any one of claims 1 to 6.

12. A chip simulation apparatus, comprising a memory and a processor, wherein the memory is configured to store a computer program which, when executed by the processor, causes the processor to perform the chip simulation method of any one of claims 7 to 10.

13. A chip simulation system, comprising the computer device of claim 11 and the chip simulation apparatus of claim 12, wherein the computer device is in communication connection with the chip simulation apparatus.

14. A computer-readable storage medium, storing a computer program which, when executed by a processor, causes the processor to perform the chip simulation method of any one of claims 1 to 6; or the chip simulation method of any one of claims 7 to 10.
